# EUROPEAN PATENT SPECIFICATION

(11) **EP 2 450 095 B1**
(45) Date of publication and mention of the grant of the patent: **08.07.2015**
(21) Application number: 11186329.6
(22) Date of filing: 24.10.2011
(51) Int. Cl.: B01D 29/90

(54) **Liquid container with filter**
Flüssigkeitsbehälter mit Filter
Conteneur de liquide avec filtre

(30) Priority: 09.11.2010 TW 99138528
(43) Date of publication of application: 09.05.2012
(73) Proprietor: Stampro Metal Industry Co., Ltd., Taichung City 428 (TW)
(72) Inventor: Chiang, Pi-Tang, 428 TAICHUNG CITY (TW)
(74) Representative: Becker Kurig Straus

(56) References cited:
- EP-A1- 0 064 795
- GB-A- 2 195 263
- US-A- 2 921 686
- US-A1- 2003 089 657

## Description

### BACKGROUND OF THE INVENTION

### 1. Field of the Invention

The present invention relates generally to a liquid container and more particularly, to a liquid container that can extend the lifespan of a filter core contained therein.

### 2. Description of the Related Art

A conventional liquid container, such as water filter, mainly comprises a container barrel and a filter core installed inside the container barrel. Usually, the container barrel is provided with a liquid inlet aiming the filter core for introducing non-filtered water into the container barrel, and a wastewater discharging hole located at a lateral side of the container barrel for discharging wastewater generated by washing the container barrel. Because the liquid inlet of the conventional liquid container is designed to be aimed at the filter core, the non-filtered liquid introducing into the container barrel will have a high pressure directly exerting on the filter core to cause a damage of the filter core or to wash the impurities attached on the filter core away from the filter core to lower the quality of the filtered liquid. In addition, the conventional liquid container has a drawback that the wastewater accumulated at the bottom portion of the container barrel can not be totally discharged out of the container barrel through the wastewater discharging hole that is located at the lateral side of the container barrel.

EP 0 064 795 relates to a process for continuous thickening of suspensions and to a filter device for said method. The filter device exhibits a cylindrical housing and having a baffle mounted in said housing in the vicinity of the inlet preventing turbulences that could harm the filter cake disposed on the filter elements.

US 2,921,686 discloses a fluid filtering apparatus with a removable filter holder and being in form of a cylindrical container having an inlet conduit disposed on a side wall thereof. In order to distribute the flow of fluid and to prevent it from striking any of the filter cartridges, a baffle and channel forming members are disposed on the inside of the cylinder.

GB 2 195 263 pertains to liquid filter with chip detecting means. The liquid filter comprises a cylindrical metal housing closed at its lower end and having an inlet unit on a top end thereof and an outlet opening (38) on a side thereof. The inlet unit has a center piece held in place in a center hole of the inlet unit through a plurality of helically-shaped vanes positioned radially between the inlet unit and the center piece.

### SUMMARY OF THE INVENTION

The present invention has been accomplished in view of the above-noted circumstances. It is therefore one objective of the present invention to provide a liquid container that can extend the lifespan of the filter core contained therein and enhance the quality of the filtered water.

Another objective of the present invention is to provide a liquid container that can completely discharge out the wastewater contained therein.

To achieve the above-mentioned objectives, a liquid container provided by the present invention comprises a container barrel having a liquid inlet, pressure reducing device mounted to the container barrel and being in connection with the liquid inlet, and a filtering unit disposed inside the container barrel and communicating with the liquid inlet and the pressure reducing device, wherein the pressure reducing device is a vortex generator, wherein the filtering unit comprises a top lid, a bottom lid, a plurality of filter cores installed between the top lid and the bottom lid, a seal ring sleeved on a periphery of the bottom lid, a handle, and an upright post mounted to the bottom lid and extending through one of the filter cores and the top lid to connect the handle.

Since the pressure reducing device can depressurize the pressure of the liquid entering the container barrel from the liquid inlet, the noise generated by the impact of the liquid on the container barrel can be reduced.

In the liquid container of the present invention, the pressure reducing device may be a vortex generator to reduce the pressure of the liquid entering the container barrel.

The liquid container further comprises a filter core, which is disposed inside the container barrel and corresponds to the liquid inlet, such that the liquid container of the present invention can have a filtering function.

In addition, since the pressure of the liquid entering the container barrel can be effectively reduced, a damage of the filter core can be prevented and the impurities attached on the filter core can hardly be washed out from the filter core, such that the lifespan of the filter core can be extended and the quality of the filtered liquid can be enhanced.

In a preferred embodiment of the present invention, the liquid container further comprises a wastewater discharging member disposed at a bottom portion of the container barrel for facilitating discharge of the wastewater generated by water washing over the container barrel.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is an exploded perspective view of a liquid container according to a preferred embodiment of the present invention;
FIG. 2 is a sectional view of the liquid container according to the preferred embodiment of the present invention, and
FIG. 3 is an exploded sectional view of a filtering unit provided by the liquid container according to the preferred embodiment of the present invention.

### DETAILED DESCRIPTION OF THE INVENTION

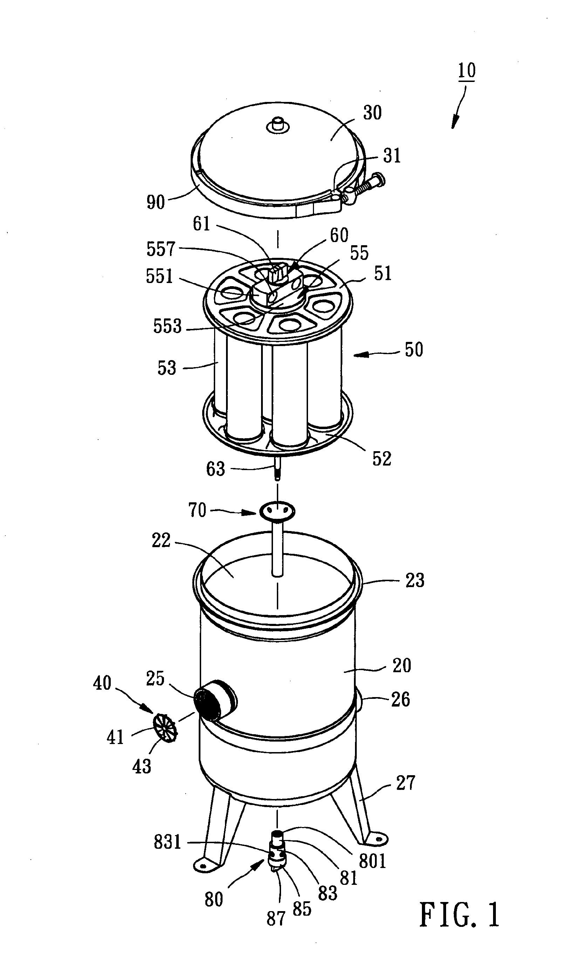

As shown in FIGS. 1-2, a liquid container 10 provided according to the present invention is mainly composed of a container barrel 20, a cap 30, a pressure reducing device 40, a filtering unit 50, a mounting rod 60, a support member 70 and a wastewater discharging member 80.

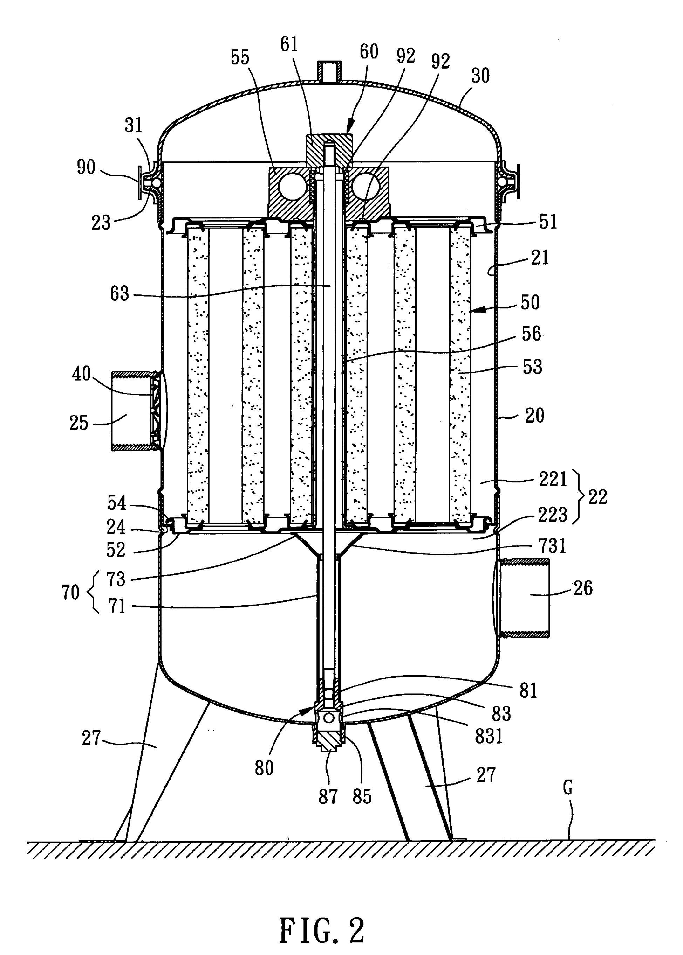

The container barrel 20 is made from stainless steel and shaped like a cylinder. As shown in FIG. 2, the container barrel 20 includes an inner surface 21 of a surrounding wall, a receiving space 22 defined by the inner surface 21, and a flange 23 protruding outwardly from an outer surface of the surrounding wall at a place adjacent to a top opening of the container barrel 20. A filtering unit mounting portion 24 extends horizontally from the inner surface 21 towards a center of the container barrel 20 and divides the receiving space 22 into an upper compartment 221 for storage of non-filtered liquid and a lower compartment 223 for storage of filtered liquid. In addition, the container barrel 20 is provided with a liquid inlet 25 communicated with the upper compartment 221, and a liquid outlet 26 communicated with the lower compartment 223. Three legs 27 are equiangularly and spacedly mounted to the bottom surface of the container barrel 20 for enabling the liquid container 10 to stand on the ground G stably.

The cap 30 is made from a stainless steel material and provided with a horizontally extending end edge 31. The cap 30 is capped on the top side of the container barrel 20 to prevent dust from entering into the container barrel 20. As shown in FIG. 2, a retainer 90 is provided to surround and tightly hold the end edge 31 of the cap 30 and the flange 23 of the container barrel 20 together, such that the container barrel 20 can be sealed.

The pressure reducing device 40, which is realized as a vortex generator 40 in this preferred embodiment, has an outer frame 41 and a plurality of blade 43 inclinedly extending from a center of the pressure reducing device to the outer frame 41. The frame 41 of the vortex generator 40 is mounted to the container barrel 20 in such a way that the blades 43 partially block the liquid inlet 25 to guide the stream of the non-filtered liquid entering the container barrel 20 from the liquid inlet 25 so as to depressurize the pressure of the aforesaid liquid. It will be appreciated that the pressure reducing device 40 is not limited to the aforesaid vortex generator. Any device that can achieve the purpose of reducing the pressure of the entering liquid may be used as the pressure reducing device 40.

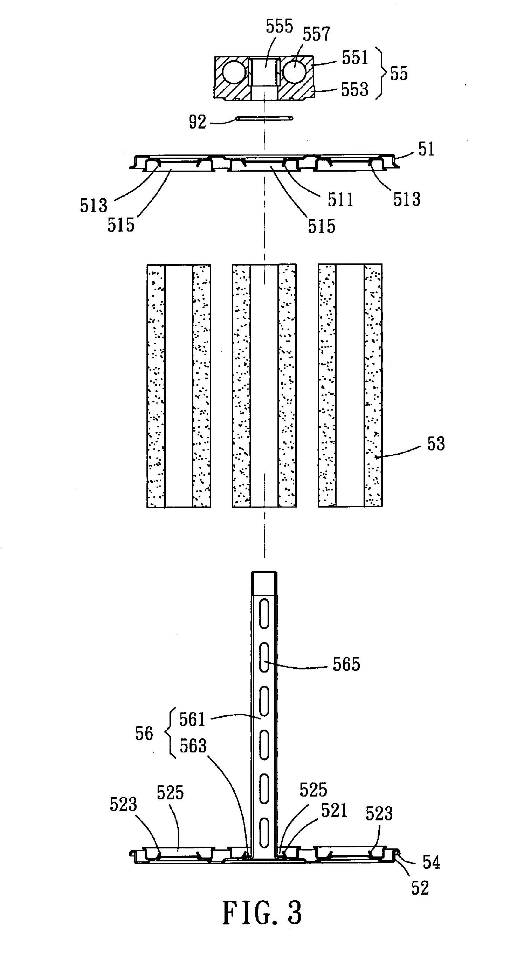

The filtering unit 50 is embodied in this preferred embodiment as, but not limited to, a detachable filtering unit. In other words, the filtering unit 50 can be a fixed unit. As shown in FIGS. 1-3, the filtering unit 50 is composed of a top lid 51, a bottom lid 52, seven filter cores 53, a seal ring 54, a handle 55 and an upright post 56. The top lid 51 is shaped like a round disc and provided with one center protrusion 511 and six ambient protrusions 513 equiangularly disposed on an imaginary circle surrounding the center protrusion 511. The center protrusion 511 is provided with a through hole 515. In addition, the bottom lid 52 is shaped like a round disc and provided with one center protrusion 521 and six ambient protrusions 523 equiangularly disposed on an imaginary circle surrounding the center protrusion 521. Each of the center protrusion 521 and the ambient protrusions 523 is provided with a through hole 525. The filter core 53 is formed of a cotton material having a filtering effect and shaped like a hollow cylinder. The seal ring 54 is a round cushion pad having a sealing effect. The handle 55 has a grip portion 551, a round bottom portion 553 and a threaded through hole 555 penetrating through the grip portion 551 and the bottom portion 553. The grip portion 551 of the handle 55 is provided with two through holes 557 for insertions of user's fingers to facilitate the user to grip and take the filtering unit 50. The upright post 56 is a hollow post having a shank 561 and a bottom 563. The shank 561 of the upright post 56 has a threaded top portion and a plurality of through holes 565 for the passing of filtered liquid.

The mounting rod 60 has a driven tab 61 and a rod-like shank 63 connected with the driven tab 61 and provided at a bottom portion thereof with a thread.

The support member 70 is formed of a hollow tube having a shank 71 and a flared head 73 that flares from the top of the shank 71. The flared head 73 has a plurality of through holes 731 for the passing of filtered liquid.

The wastewater discharging member 80 includes a head 81, a body 83, a tail 85, a liquid discharging valve 87, and a through hole 801 penetrating through the head 81, the body 83 and the tail 85, and having a threaded section corresponding in location to the head 81 and an upper portion of the body 83. The lower portion of the body 83 has three liquid discharging holes 831 communicated with the through hole 801. The valve 87 is connected to the tail 85 to open or close the through hole 801.

In assembly of the filtering unit 50, as shown in FIGS. 1-3, the filter cores 53 are installed between the top lid 51 and the bottom lid 52 in such a way that the protrusions 511 and 513 of the top lid 51 and the protrusions 521 and 523 of the bottom lid 52 are inserted respectively into two ends of the filter cores 53 and the upright post 56 extends through the through hole 525 of the center protrusion 521 of the bottom lid 52, passes through the center one of the filter cores 53 and the through hole 515 of the center protrusion 511 of the top lid 51, and is threaded with the threaded through hole 555 of the handle 55. By means of the aforesaid screwing connection, the top lid 51 and the bottom lid 52 can be forced to move toward each other so as to firmly clamp the filter cores 53 therebetween. In addition, the seal ring 54 is sleeved on a periphery of the bottom lid 52. Further, in order to firmly connect the handle 55 with the top lid 51, filter cores 53, bottom lid 52 and upright post 56 in sequence, an O-ring 92 can be provided between the handle 55 and the top lid 51. It will be appreciated that the upright post 56 can be, in practice, welded with the bottom lid 52 directly.

In assembly of the liquid container 10, as shown in FIG. 1, the wastewater discharging member 80 is mounted to a bottommost location of the bottom portion of the container barrel 20 in such a way that the head 81 and the body 83 of the wastewater discharging member 80 are located in the lower compartment 223 of the receiving space 22 and the tail 85 of the wastewater discharging member 80 is exposed outside the container barrel 20 such that the liquid discharging holes 831 are located inside the container barrel 20 and the liquid discharging valve 87 is located outside the container barrel 20. Further, the shank 71 of the support member 70 is sleeved onto the head 81 of the wastewater discharging member 80, the filtering unit 50 is placed on the filtering unit mounting portion 24 of the container barrel 20 with the seal ring 54 abutting against the filtering unit mounting portion 24, the flared head 73 of the support member 70 supports the bottom lid 52 of the filtering unit 50, and the shank 63 of the mounting rod 60 is inserted through the filtering unit 50 and the support member 70 and threaded with the wastewater discharging member 80 with the driven tab 61 abutting against the handle 55. In this way, the filtering unit 50 can be firmly mounted inside the container barrel 20 and the pressure reducing device (the vortex generator) 40 is aimed at the filtering unit 50. Similarly, in order to firmly mount the detachable filtering unit 50 to the container barrel 20, an O-ring 92 can be provided between the driven tab 61 of the mounting rod 60 and the handle 55.

When the liquid container 10 of the present invention is in operation, the non-filtered liquid streaming through the liquid inlet 25 will first encounter the vortex generator 40 and then enter the upper compartment 221 of the receiving space 22 of the container barrel 20 with a reduced pressure. When the container barrel 20 is washed with cleaning water, the wastewater accumulated at the bottom portion of the container barrel 20 can be discharged out of the container barrel 20 through the liquid discharging holes 831 of the wastewater discharging member 80. Because the wastewater discharging member 80 is located at the bottommost location of the container barrel 20, the wastewater can be completely discharged out of the container barrel 20.

In conclusion, since a pressure reducing device is installed at the liquid inlet of the container barrel of the liquid container of the present invention, the pressure of the liquid entering the container barrel can be effectively depressurized so as to lower the noise due to impact of the liquid on the container barrel. Further, when filter cores are installed inside the container barrel, the pressure reducing device can prevent a filter core that is located adjacent to the liquid inlet from damage due to a high pressure perpetually exerting on the filter core, or prevent the impurities attached on the filter core from washing out from the filter core due to a high pressure exerting on the aforesaid filter core, such that the lifespan of the filter core can be extended and the quality of the filtered liquid can be enhanced. In addition, since the wastewater discharging member is installed at the bottommost location of the container barrel, the wastewater generated after water washing over the container barrel can be completely discharged out of the container barrel.

## Claims

1. A liquid container (10), **characterized in that** the liquid container (10) comprises:
a container barrel (20) having a liquid inlet (25),
a pressure reducing device (40) mounted to the container barrel (20) and being in connection with the liquid inlet (25), and
a filtering unit (50) disposed inside the container barrel (20) and communicating with the liquid inlet (25) and the pressure reducing device (40), wherein the pressure reducing device (40) is a vortex generator, **characterized in that** the filtering unit (50) comprises a top lid (51), a bottom lid (52), a plurality of filter cores (53) installed between the top lid (51) and the bottom lid (52), a seal ring (54) sleeved on a periphery of the bottom lid (52), a handle (55), and an upright post (56) mounted to the bottom lid (52) and extending through one of the filter cores (53) and the top lid (51) to connect the handle (55).

2. The liquid container (10) of claim 1, **characterized in that** the container barrel (20) comprises a mounting portion (24) on which the filtering unit (50) is mounted.

3. The liquid container (10) of claim 2, **characterized in that** the mounting portion (24) of the container barrel (20) extends horizontally from an inner surface of the container barrel (20) towards a center of the container barrel (20).

4. The liquid container (10) of claim 1, **characterized in that** the vortex generator (40) comprises an outer frame (41) and a plurality of blades (43) extending inclinedly from a center of the vortex generator (41) towards the outer frame.

5. The liquid container (10) of claim 1, **characterized in that** the liquid container (10) further comprises a wastewater discharging member (80) disposed at a bottom portion of the container barrel (20).

6. The liquid container (10) of claim 5, **characterized in that** the wastewater discharging member (80) is disposed at a bottommost location of the container barrel (20).

7. The liquid container (10) of claim 5, **characterized in that** the wastewater discharging member (80) comprises a liquid discharging hole (831) located inside the container barrel (20) and a liquid discharging valve (87) located outside the container barrel (20).

## Patentansprüche

1. Flüssigkeitsbehälter (10), **dadurch gekennzeichnet, dass** der Flüssigkeitsbehälter (10) umfasst:
Ein Behälterfass (20) mit einem Flüssigkeitseinlass (25);
Eine Druckreduzierungseinrichtung (40), die in dem Behälterfass (20) befestigt ist und mit dem Flüssigkeitseinlass (25) in Verbindung steht; und
Eine Filtereinheit (50), die in dem Behälterfass (20) angeordnet ist und mit dem Flüssigkeitseinlass (25) und der Druckreduzierungseinrichtung (40) in Verbindung steht, worin die Druckreduzierungseinrichtung (40) ein Vortexgenerator ist, **dadurch gekennzeichnet, dass** die Filtereinheit (50) einen oberen Deckel (51), einen unteren Deckel (52), mehrere zwischen dem oberen Deckel (51) und dem unteren Deckel (52) angeordnete Filterkerne (53), einen auf einem Umfang des unteren Deckels (52) aufgezogenen Dichtungsring (54), einen Handgriff (55) und einen nach oben stehenden Pfosten (56), der auf dem unteren Deckel (52) befestigt ist und sich durch einen der Filterkerne (53) und den oberen Deckel (51) erstreckt, um den Handgriff (55) zu verbinden.

2. Flüssigkeitsbehälter (10) nach Anspruch 1, **dadurch gekennzeichnet, dass** das Behälterfass (20) einen Befestigungsbereich (24) umfasst, auf dem die Filtereinheit (50) befestigt ist.

3. Flüssigkeitsbehälter (10) nach Anspruch 2, **dadurch gekennzeichnet, dass** sich der Befestigungsbereich (24) des Behälterfasses (20) von einer Innenfläche des Behälterfasses (20) horizontal auf ein Zentrum des Behälterfasses (20) erstreckt.

4. Flüssigkeitsbehälter (10) nach Anspruch 1, **dadurch gekennzeichnet, dass** der Vortexgenerator (40) einen äußeren Rahmen (41) und mehrere Blätter (43) umfasst, die sich winklig von einem Zentrum des Vortexgenerators (41) auf den äußeren Rahmen erstrecken.

5. Flüssigkeitsbehälter (10) nach Anspruch 1, **dadurch gekennzeichnet, dass** der Flüssigkeitsbehälter (10) weiter ein Abwasserentleerungselement (80) umfasst, das am Bodenbereich des Behälterfasses (20) angeordnet ist.

6. Flüssigkeitsbehälter (10) nach Anspruch 5, **dadurch gekennzeichnet, dass** das Abwasserentleerungselement (80) an der untersten Stelle des Behälterfasses (20) angeordnet ist.

7. Flüssigkeitsbehälter (10) nach Anspruch 5, **dadurch gekennzeichnet, dass** das Abwasserentleerungselement (80) ein in dem Behälterfass (20) angeordnetes Flüssigkeitsentleerungsloch (831) umfasst, und ein ausserhalb des Behälterfasses (20) angeordnetes Flüssigkeitsentleerungsventil (87).

## Revendications

1. Récipient à liquide (10), **caractérisé en ce que** le récipient à liquide (10) comprend : un cylindre de récipient (20) possédant une entrée de liquide (25),
un dispositif de réduction de pression (40) monté sur le cylindre de récipient (20) et étant en liaison avec l'entrée de liquide (25), et
une unité filtrante (50) disposée à l'intérieur du cylindre de récipient (20) et communiquant avec l'entrée de liquide (25) et le dispositif de réduction de pression (40), dans lequel le dispositif de réduction de pression (40) est un générateur de tourbillon, **caractérisé en ce que** l'unité filtrante (50) comprend un couvercle supérieur (51), un couvercle inférieur (52), une pluralité d'âmes de filtre (53) installées entre le couvercle supérieur (51) et le couvercle inférieur (52), une bague d'étanchéité (54) gainée sur une périphérie du couvercle inférieur (52), une poignée (55), et un montant vertical (56) monté sur le couvercle inférieur (52) et s'étendant à travers une des âmes de filtre (53) et le couvercle supérieur (51) pour relier la poignée (55).

2. Récipient à liquide (10) selon la revendication 1, **caractérisé en ce que** le cylindre de récipient (20) comprend une partie de montage (24) sur lequel est montée l'unité filtrante (50).

3. Récipient à liquide (10) selon la revendication 2, **caractérisé en ce que** la partie de montage (24) du cylindre de récipient (20) s'étend horizontalement à partir d'une surface interne du cylindre de récipient (20) en direction d'un centre du cylindre de récipient (20).

4. Récipient à liquide (10) selon la revendication 1, **caractérisé en ce que** le générateur de tourbillon (40) comprend un cadre externe (41) et une pluralité de pales (43) s'étendant de façon inclinée à partir d'un centre du générateur de tourbillon (41) en direction du cadre externe.

5. Récipient à liquide (10) selon la revendication 1, **caractérisé en ce que** le récipient à liquide (10) comprend en outre un élément d'évacuation d'eaux usées (80) disposé au niveau d'une partie inférieure du cylindre de récipient (20).

6. Récipient à liquide (10) selon la revendication 5, **caractérisé en ce que** l'élément d'évacuation d'eaux usées (80) est disposé au niveau d'un emplacement tout en bas du cylindre de récipient (20).

7. Récipient à liquide (10) selon la revendication 5, **caractérisé en ce que** l'élément d'évacuation d'eaux usées (80) comprend un orifice d'évacuation de liquide (831) situé à l'intérieur du cylindre de récipient (20) et une vanne d'écoulement de liquide (87) située à l'extérieur du cylindre de récipient (20).
